# FASCICULE DE BREVET EUROPEEN

(11) **EP 1 619 489 B1**
(45) Date de publication et mention de la délivrance du brevet: **19.03.2008**
(21) Numéro de dépôt: 04291835.9
(22) Date de dépôt: 19.07.2004
(51) Int. Cl.: G01M 15/14, F02K 1/08

(54) **Equipement pour essais de développement d'un turboréacteur**
Testanlage zur Entwicklung eines Strahltriebwerks
Test equipment for the development of an aircraft gas turbine engine

(43) Date de publication de la demande: 25.01.2006
(73) Titulaire: Techspace Aero, 4041 Milmort Herstal (BE)
(72) Inventeur: Reichling, Grégory, 4000 Liege (BE)
(74) Mandataire: Barbin le Bourhis, Joël

(56) Documents cités:
- FR-A- 1 452 558
- US-A- 2 641 104
- US-A- 4 802 629
- KANDEBO S W: "HSCT ENGINE RESEARCH MAKES STEADY GAINS" AVIATION WEEK AND SPACE TECHNOLOGY, vol. 139, no. 11, 13 septembre 1993 (1993-09-13), pages 46-47,50, XP000397334 NEW YORK, US ISSN: 0005-2175

## Description

L'invention se rapporte à un équipement pour les essais de développement au sol d'un turboréacteur; elle concerne plus particulièrement une installation destinée à générer des variations de pression sur la turbine basse pression d'un turboréacteur en cours de conception, afin de tester le comportement du turboréacteur et valider ses limites de fonctionnement. L'équipement en question est tout particulièrement indiqué pour la conception et la mise au point d'un turboréacteur à double flux.

En agissant sur la section de sortie de la tuyère primaire, on peut faire varier la pression au niveau de la sortie de la turbine basse pression et par conséquent observer le comportement du turboréacteur sous des conditions de fonctionnement différentes, en vue notamment d'identifier la limite de « pompage » du moteur.

Plusieurs systèmes permettant de faire varier la section de sortie de la tuyère ont déjà été proposés. Par exemple, on a utilisé un cône mobile accroché à un pylône d'essai. Dans un tel système, le cône est disposé selon l'axe principal du moteur avec la pointe dirigée vers la tuyère. Il peut être déplacé le long de cet axe pour faire varier la section d'échappement de la tuyère. Dans un système de ce genre, le dispositif mécanique supportant et déplaçant le cône, constitue un ensemble volumineux et complexe qui ne permet pas l'installation de carénages autour du pylône qui permettraient de simuler les lignes de flux réelles. Par conséquent, les lignes de flux de la tuyère normalement destinée au moteur ne sont pas respectées. Les données qui peuvent être recueillies à partir d'une telle installation sont donc approximatives.

Dans la présente description on désigne par "flux primaire" l'écoulement des gaz chauds s'échappant de la tuyère et par "flux secondaire" l'écoulement d'air froid provenant de la soufflante.

Il est aussi connu d'installer une série de volets mobiles sur le pourtour de la tuyère, ce qui permet de faire varier la section d'écoulement de la veine d'air. Un tel système est appliqué sur le flux secondaire mais est trop encombrant pour être adapté au flux primaire. Il n'est pas adapté pour recueillir des informations comparables à celles qui sont obtenues en faisant varier la section du flux primaire, à la sortie d'échappement des gaz sortant de la turbine.

L'invention permet de faire varier la section d'écoulement des gaz sortant de la turbine basse pression tout en respectant les lignes de flux de la tuyère prévue pour le moteur.

Plus précisément, l'invention concerne un équipement d'essai pour les développements d'un turboréacteur à double flux, caractérisé en ce qu'il comporte un cône de tuyère fictif à géométrie ajustable, destiné à être installé axialement à la sortie d'échappement dudit turboréacteur, en vue de pouvoir modifier dynamiquement à volonté l'écoulement des gaz d'échappement pendant une série d'essais de développement.

Avantageusement, l'équipement défini ci-dessus peut être prévu et conformé pour être disposé à la place du cône de tuyère normal prévu à la sortie d'échappement du turboréacteur. Le cône de tuyère fictif est fixe. Il peut être directement fixé sur le moteur ce qui simplifie considérablement l'équipement ainsi que son utilisation. En outre, les lignes de flux de la tuyère sont respectées.

Selon un mode de réalisation préféré, le cône de tuyère fictif comporte un tronçon de section variable et ajustable. Ce tronçon peut être constitué essentiellement par une pluralité de volets montés articulés le long d'un bord circulaire d'un corps annulaire profilé. Les volets se chevauchent de proche en proche circonférentiellement, pour définir une surface globalement tronconique à section ajustable.

Selon un agencement avantageux, le moteur d'entraînement est fixé sur un portique caché dans le carénage arrière du moteur. Le portique et le cône de tuyère fictif sont reliés entre eux par un bras profilé aérodynamiquement. De cette façon, le flux primaire n'est pratiquement pas perturbé.

Pour l'actionnement des volets, on utilisera de préférence des vérins à vis commandés par un système d'actionnement mécanique agencé à l'intérieur du portique, du bras profilé et du cône de tuyère fictif.

Avantageusement, des moyens de refroidissement par air sont prévus à l'intérieur du portique et du bras pour injecter de l'air de refroidissement dans le cône de tuyère fictif, pendant toute la période de test.

L'invention sera mieux comprise et d'autres avantages de celle-ci apparaîtront plus clairement à la lumière de la description qui va suivre d'un équipement d'essai conforme à son principe, donnée uniquement à titre d'exemple et faite en référence aux dessins annexés dans lesquels :

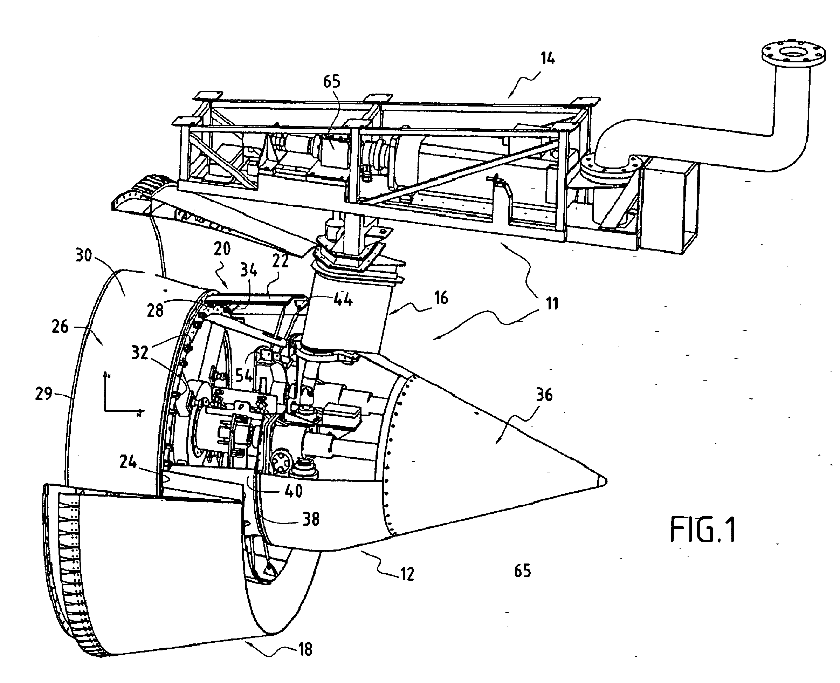

- la figure 1 est une vue générale en perspective de l'équipement d'essai placé à la sortie de la tuyère d'échappement d'un turboréacteur ;

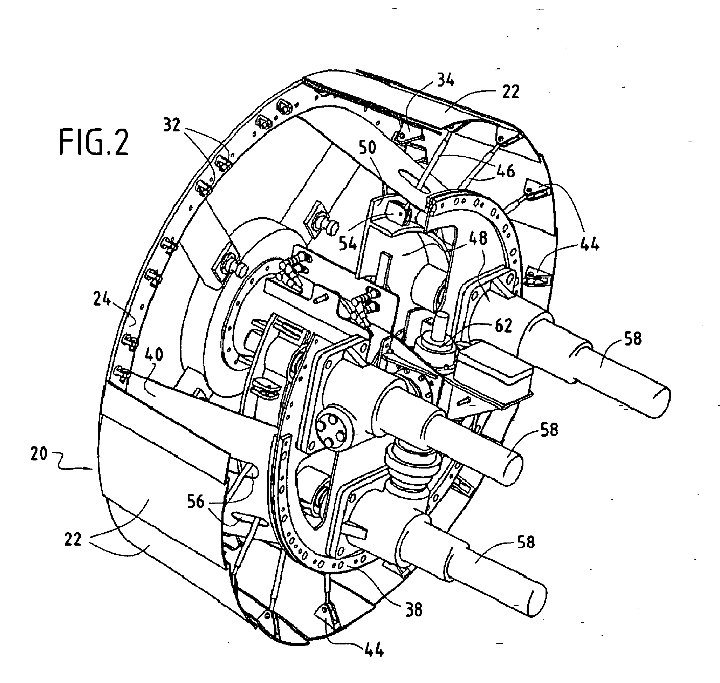

- la figure 2 est une vue à plus grande échelle du tronçon de section variable et ajustable de l'équipement ; et

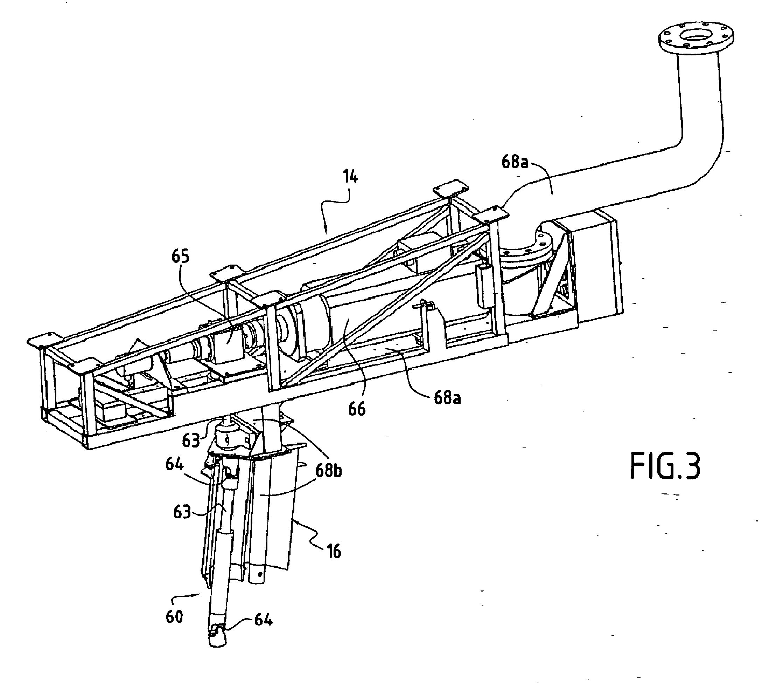

- la figure 3 est une vue partielle en perspective de l'équipement montrant plus particulièrement le portique et le bras raccordés au cône de tuyère fictif.

L'équipement d'essai 11 représenté se compose principalement d'un cône de tuyère fictif 12 et d'un portique 14 fixe, ledit cône de tuyère fictif étant installé sous le portique et rattaché à ce dernier par un bras 16 profilé aérodynamiquement. Du fait de sa forme, le bras 16 ne perturbe pratiquement pas le flux primaire des gaz chauds éjectés par la tuyère 18 du turboréacteur. Le reste du turboréacteur n'est pas représenté. Les gaz d'échappement provenant de la turbine sont rejetés par un passage annulaire 20 défini entre ladite tuyère et un cône central. Dans l'exemple, le cône de tuyère fictif 12 remplace le cône central normal du turboréacteur ; il est installé à son emplacement et a sensiblement la même forme et les mêmes dimensions que celui-ci.

Le portique 14 ne perturbe pas plus le flux secondaire (qui circule à l'extérieur de la tuyère) que ne le ferait la structure par laquelle le moteur est normalement rattaché à l'avion.

Au cours des essais, le cône de tuyère fictif 12 est donc installé axialement à la sortie d'échappement du turboréacteur. Il est fixe par rapport à ce dernier puisque le portique 14 ne se déplace pas parallèlement à la direction axiale de la tuyère, pendant les essais.

Selon une caractéristique importante de l'invention, le cône de tuyère fictif 12 est à géométrie ajustable en vue de pouvoir modifier à volonté l'écoulement des gaz d'échappement pendant une série d'essais de mise au point. Dans l'exemple, le cône de tuyère fictif 12 comporte un tronçon de section variable et ajustable 20. Par conséquent, autour de ce tronçon 20 engagé dans la tuyère 18, la section d'écoulement des gaz d'échappement va pouvoir être modifiée à volonté et continûment.

Comme représenté, le tronçon de section variable et ajustable comporte une pluralité de volets 22 montés articulés le long d'un bord circulaire 24 d'un corps tronconique 26, annulaire, engagé dans la tuyère. Avantageusement, les volets 22 se chevauchent de proche en proche, circonférentiellement, pour définir une surface globalement tronconique à section ajustable radialement. Le corps tronconique 26 comporte un anneau avant 29 et un anneau arrière 28 reliés par un carénage 30 en tôle en lui conférant sa forme tronconique. L'anneau arrière 28 porte les tourillons 32 auxquels s'articulent les volets 22. Ceux-ci comportent des chapes 34 soudées à leur face intérieure, par lesquelles ils s'articulent dans le prolongement de l'anneau arrière. La partie conique arrière 36 comporte un anneau avant 38 rattaché au corps tronconique 26 par une couronne tronconique 40. Les bords arrières des volets 22 viennent se resserrer contre l'anneau 38 du cône arrière 36 lorsque lesdits volets sont complètement rétractés et qu'ils n'offrent aucune résistance à l'écoulement des gaz.

L'espace interne de la partie conique arrière 36 et du tronçon de section variable et ajustable 20, abrite les moyens d'actionnement simultané des volets.

Plus particulièrement, chaque volet 22 comporte à sa face interne, une chape d'articulation 44 à laquelle est connectée l'extrémité d'une bielle 46. Par ailleurs, les bielles 46 sont toutes reliées à un mécanisme commun 48 permettant un actionnement simultané et uniforme de tous les volets. Ce mécanisme commun comporte un disque 50, annulaire, dont l'axe est confondu avec celui du cône. Ce disque est monté mobile axialement à l'intérieur du cône. Les bielles 46 sont toutes articulées à ce disque. Plus précisément, ces bielles sont articulées entre les chapes 44 desdits volets et d'autres chapes 54 fixées au disque 50 et régulièrement espacées circonférentiellement le long de celui-ci. Chaque bielle traverse un trou oblong 56 pratiqué dans la couronne tronconique 40, pour que le mouvement pivotant de la bielle ne soit pas entravé. Le positionnement du disque 50 est déterminé par des vérins 58 (trois vérins parallèles, selon l'exemple), agencés parallèlement à l'axe du cône. Il s'agit de vérins à vis entraînés mécaniquement par un système de transmission à cardans 60. L'entraînement simultané des vérins peut être obtenu par une commande motorisée connectée par un système de tiges, de cardans et une première boîte de transmission 65 à une seconde boîte de transmission 62, les engrenages de la seconde boîte de tranmission 62 étant en prise avec ceux des vérins à vis. Un mécanisme d'actionnement des vérins (63, 64, 65) est agencé à l'intérieur du portique et du bras. Une succession de tiges d'actionnement 63 et cardans 64 s'étend entre cette seconde boîte de transmission 62 et la première boîte de transmission 65 située dans le portique 14, pour être manoeuvrée à distance, éventuellement au moyen d'un moteur électrique 66 piloté, situé dans le portique. Le système d'actionnement mécanique des vérins s'étend donc depuis le portique 14 jusqu'au cône fictif en passant par le bras 16 profilé aérodynamiquement. En outre, des moyens de refroidissement par air 68a, 68b sont agencés à l'intérieur du portique et du bras pour faire circuler de l'air de refroidissement dans le cône de tuyère fictif, pendant la période d'essai. Les éléments représentés sont des conduits reliés à une source d'air comprimé, non représentée.

Il résulte avec évidence de la description qui précède qu'un déplacement continu et régulier du disque 50 sous l'action des vérins 58 provoque un déplacement simultané et continûment progressif de tous les volets 22, aboutissant à faire varier la section d'écoulement annulaire des gaz d'échappement, définie entre le cône de tuyère fictif 12 et la paroi intérieure de la tuyère 18. Le moteur électrique 66 peut être intégré dans une chaîne d'asservissement pour un contrôle précis et permanent de la position des volets 22. Ce système permet donc d'obtenir un contrôle précis de la section de sortie de la tuyère, n'engendrant qu'une faible perturbation du flux primaire et ne modifiant pas le flux secondaire, comparé aux conditions normales de vol. Les lignes de flux aérodynamiques de la tuyère sont similaires à celles de la tuyère normale (d'où la possibilité de simuler des situations proches des situations réelles). L'équipement s'intègre facilement sur un banc d'essais existant.

## Revendications

1. Equipement d'essai pour les développements d'un turboréacteur, **caractérisé en ce qu'**il comporte un cône de tuyère fictif (12) à géométrie ajustable (20); destiné à être installé axialement à la - sortie d'échappement dudit turboréacteur, en vue de pouvoir modifier dynamiquement à volonté l'écoulement des gaz d'échappement pendant une série d'essais de développement.

2. Equipement selon la revendication 1, **caractérisé en ce que** ledit cône de tuyère fictif (12) comporte un tronçon de section variable et ajustable (20).

3. Equipement selon la revendication 2, **caractérisé en ce que** ledit tronçon de section variable et ajustable (20) comporte une pluralité de volets (22) montés articulés le long d'un bord circulaire d'un corps tronconique (26).

4. Equipement selon la revendication 3, **caractérisé en ce que** lesdits volets (22) se chevauchent circonférentiellement, de proche en proche pour définir une surface globalement tronconique à section ajustable.

5. Equipement selon la revendication 3 ou 4, **caractérisé en ce que** chaque volet (22) comporte à sa face interne une chape d'articulation à laquelle est connectée l'extrémité d'une bielle (46) et **en ce que** les bielles associées auxdits volets sont reliées à un mécanisme commun (48), pour un actionnement simultané des volets.

6. Equipement selon la revendication 4, **caractérisé en ce que** ledit mécanisme commun (48) comporte un disque (50) dont l'axe est confondu avec celui dudit cône, **en ce que** ledit disque est monté mobile axialement à l'intérieur dudit cône, **en ce que** le positionnement dudit disque est déterminé par des vérins (58) agencés parallèlement à l'axe dudit cône et **en ce que** lesdites bielles sont articulées entre les chapes desdits volets et des chapes fixées auxdits disques et régulièrement espacées circonférentiellement le long de celui-ci.

7. Equipement selon l'une des revendications précédentes, **caractérisé en ce que** ledit cône de tuyère fictif est fixé sous un portique (14), les deux éléments étant reliés entre eux par un bras profilé aérodynamiquement (16).

8. Equipement selon la revendication 7, **caractérisé en ce qu**'un mécanisme d'actionnement des vérins (63, 64, 65) est agencé à l'intérieur dudit portique et dudit bras.

9. Equipement selon la revendication 7 ou 8, **caractérisé en ce que** des moyens de refroidissement par air (68a, 68b) sont agencés à l'intérieur dudit portique et dudit bras pour faire circuler de l'air de refroidissement dans ledit cône de tuyère fictif.

## Claims

1. Test equipment for the development of a jet engine, **characterized in that** it comprises a dummy nozzle cone (12) of adjustable geometry (20) that is intended to be installed axially at the exhaust outlet of the said jet engine so that it is possible for the flow of exhaust gases to be modified dynamically at will during a series of development tests.

2. Equipment according to Claim 1, **characterized in that** the said dummy nozzle cone (12) comprises a portion (20) of variable and adjustable cross section.

3. Equipment according to Claim 2, **characterized in that** the said portion (20) of variable and adjustable cross section comprises a plurality of flaps (22) mounted in an articulated manner along a circular edge of a frustoconical body (26).

4. Equipment according to Claim 3, **characterized in that** the said flaps (22) overlap one another circumferentially by degrees so as to define an overall frustoconical area of adjustable cross section.

5. Equipment according to Claim 3 or 4, **characterized in that** each flap (22) is provided at its internal face with an articulation yoke to which the end of a link rod (46) is connected, and **in that** the link rods associated with the said flaps are connected to a common mechanism (48) to achieve simultaneous actuation of the flaps.

6. Equipment according to Claim 4, **characterized in that** the said common mechanism (48) comprises a disc (50) whose axis is coincident with the axis of the said cone, **in that** the said disc is mounted axially movably inside the said cone, **in that** the positioning of the said disc is determined by jacks (58) arranged parallel to the axis of the said cone, and **in that** the said link rods are articulated between the yokes of the said flaps and yokes which are fastened to the said disc and spaced circumferentially in a uniform manner along this disc.

7. Equipment according to one of the preceding claims, **characterized in that** the said dummy nozzle cone is fastened below a gantry (14), the two elements being connected together by means of an aerodynamically profiled arm (16).

8. Equipment according to Claim 7, **characterized in that** a mechanism (63, 64, 65) for actuating the jacks is arranged inside the said gantry and the said arm.

9. Equipment according to Claim 7 or 8, **characterized in that** air cooling means (68a, 68b) are arranged inside the said gantry and the said arm in order to circulate cooling air into the said dummy nozzle cone.

## Patentansprüche

1. Testeinrichtung für die Entwicklung eines Turbostrahltriebwerks, **dadurch gekennzeichnet, daß** sie einen fiktiven Düsenkegel (12) mit einstellbarer Geometrie (20) umfaßt, welcher dazu bestimmt ist, axial zum Abgasaustritt des Turbostrahltriebwerks angebracht zu werden, im Hinblick darauf, die Strömung der Abgase während einer Reihe von Entwicklungstests nach Belieben dynamisch verändern zu können.

2. Einrichtung nach Anspruch 1, **dadurch gekennzeichnet, daß** der fiktive Düsenkegel (12) einen Abschnitt mit variablem und einstellbarem Querschnitt (20) umfaßt.

3. Einrichtung nach Anspruch 2, **dadurch gekennzeichnet, daß** der genannte Abschnitt mit variablem und einstellbarem Querschnitt (20) eine Vielzahl von Klappen (22) umfaßt, die entlang eines kreisförmigen Randes eines kegelstumpfförmigen Körpers (26) gelenkig angebracht sind.

4. Einrichtung nach Anspruch 3, **dadurch gekennzeichnet, daß** die Klappen (22) sich in Umfangsrichtung nach und nach überlappen, um eine allgemein kegelstumpfförmige Fläche mit einstellbarem Querschnitt zu definieren.

5. Einrichtung nach Anspruch 3 oder 4, **dadurch gekennzeichnet, daß** jede Klappe (22) an ihrer Innenseite eine Gelenkgabel aufweist, an die das Ende einer Stange (46) angeschlossen ist, und daß die den Klappen zugeordneten Stangen mit einem gemeinsamen Mechanismus (48) für ein gleichzeitiges Betätigen der Klappen verbunden sind.

6. Einrichtung nach Anspruch 4, **dadurch gekennzeichnet, daß** der gemeinsame Mechanismus (48) eine Scheibe (50) aufweist, deren Achse mit der des genannten Kegels zusammenfällt, daß die Scheibe innerhalb des Kegels axial beweglich angebracht ist, daß die Positionierung der Scheibe durch parallel zur Achse des Kegels angeordnete Zylinder (58) bestimmt wird und daß die Stangen zwischen den Gabeln der Klappen und Gabeln, die an den Scheiben befestigt und in Umfangsrichtung entlang dieser gleichmäßig beabstandet sind, angelenkt sind.

7. Einrichtung nach einem der vorhergehenden Ansprüche, **dadurch gekennzeichnet, daß** der fiktive Düsenkegel unter einem brückenförmigen Gerüst (14) befestigt ist, wobei die zwei Elemente durch einen aerodynamisch profilierten Arm (16) untereinander verbunden sind.

8. Einrichtung nach Anspruch 7, **dadurch gekennzeichnet, daß** ein Mechanismus zum Betätigen der Zylinder (63, 64, 65) innerhalb des brückenförmigen Gerüsts und des Arm angeordnet ist.

9. Einrichtung nach Anspruch 7 oder 8, **dadurch gekennzeichnet, daß** Mittel zum Kühlen mittels Luft (68a, 68b) innerhalb des brückenförmigen Gerüsts und des Arms angeordnet sind, um Kühlluft in dem fiktiven Düsenkegel zirkulieren zu lassen.
